# EUROPEAN PATENT SPECIFICATION

(11) **EP 3 450 505 B1**
(45) Date of publication and mention of the grant of the patent: **07.06.2023**
(21) Application number: 17789789.9
(22) Date of filing: 23.03.2017
(51) Int. Cl.: C08L 81/00, C08G 75/0222, C08G 75/0268, C08K 5/548, C08K 5/00, C08L 63/00, C08L 79/08, C08K 5/3492, C08K 9/06, C08K 7/14, C08K 3/26, C08K 5/29, C08L 81/02

(54) **POLYARYLENE SULFIDE RESIN COMPOSITION HAVING EXCELLENT HYDROLYSIS RESISTANCE**
POLYARYLENSULFIDHARZZUSAMMENSETZUNG MIT HERVORRAGENDER HYDROLYSEBESTÄNDIGKEIT
COMPOSITION DE RÉSINE DE POLY(SULFURE D'ARYLÈNE) PRÉSENTANT UNE EXCELLENTE RÉSISTANCE À L'HYDROLYSE

(30) Priority: 26.04.2016 KR 20160051080
(43) Date of publication of application: 06.03.2019
(73) Proprietor: HDC POLYALL Co., Ltd., Ulsan 44784 (KR)
(72) Inventor: JUNG, Myung-wook, Seoul 05783 (KR); SHIN, Jong-Wook, Suwon-si Gyeonggi-do 16316 (KR)
(74) Representative: dompatent von Kreisler Selting Werner - Partnerschaft von Patent- und Rechtsanwälten mbB
(86) International application number: PCT/KR2017/003130
(87) International publication number: WO 2017/188604

(56) References cited:
- WO-A1-2015/064482
- CN-A- 104 151 824
- CN-B- 103 554 914
- JP-A- 2015 214 612
- KR-A- 20130 102 035
- US-A- 4 528 310
- US-A- 5 149 731
- US-A1- 2012 329 983

## Description

### Technical Field

The present invention relates to a polyarylene sulfide resin composition which is excellent in hydrolysis resistance and thus suitable for parts of an automobile coolant system.

### Background Art

Currently, a demand for polyarylene sulfide (also, referred to as "PAS"), a representative engineering plastic, has increased in various electronic goods and products used in high temperatures and corrosive environments due to its high thermal resistance, chemical resistance, flame resistance and electric insulation.

Polyphenylene sulfide (also, referred to as "PPS") is the only commercially available polyarylene sulfide. PPS is widely used for housing or major parts of automobile equipment, electric or electronic devices due to its excellent mechanical, electrical and thermal properties, and chemical resistance.

The process widely used for the commercial production of PPS is a solution polymerization of p-dichlorobenzene (hereinafter, referred to as 'pDCB') and sodium sulfide in a polar organic solvent such as N-methyl pyrrolidone, which is known as the Macallum process.

When PPS is produced by the Macallum process, however, the solution polymerization process using sodium sulfide, etc. may produce by-products in a salt form (*e.g*., NaCl). Since such by-products in a salt form may deteriorate the performance of electronic parts, additional washing or drying processes, etc. are required to remove the by-products and residual organic solvents (*see* US Patent Nos. 2,513,188 and 2,583,941).

In order to resolve the above problems, a process of preparing PAS by melt polymerization of reactants containing diiodide aromatic compounds and elemental sulfur has been suggested. As such process neither produces by-products in a salt form during the preparation of PAS nor uses organic solvents, it does not require any separate processes for removing such by-products or organic solvents (*see* Korean Laid-Open Patent Publication No. 2011-0102226).

Meanwhile, PPS exhibits excellent chemical resistance, particularly durability against solution immersion, and thus, it is used for engine parts, particularly coolant, oil pump parts, etc. However, since the parts of the automobile engine are related with the safety of a driver, the improvement of their durability is essential. Particularly, since an engine coolant part is in direct contact with the coolant, the improvement of its long-term durability is needed.

US 2012/329983 A1 discloses a polyarylene sulfide comprising an arylene sulfide repeat unit and an arylene disulfide repeat unit, wherein the weight ratio of the arylene sulfide repeat unit:arylene disulfide repeat unit is 1:0.0001 to 1:0.05.

CN 103 554 914 B discloses a hydrolysis-resistant modified polyphenylene sulfide composite material, wherein the anti-hydrolysis agent is carbodiimide or/and epoxy compound.

US 4 528 310 A discloses a composition comprising poly(arylene sulfide), glass and at least one organosilane selected from the group consisting of: 3-N-(Trimethoxysilylpropyl) poly(ethylenimine), Diethylamino-3-trimethoxysilylpropyl-disulfide, and 3-(Diethylamino) propyltrimethoxysilane.

### Disclosure of Invention

### Technical Problem

Accordingly, an object of the present invention is to provide a PAS resin composition which is excellent in hydrolysis resistance and can confer long-term durability to automobile coolant (antifreeze solution) system and the like.

Another object of the present invention is to provide a molded article manufactured by molding the PAS resin composition.

### Solution to Problem

To achieve the above objects, the present invention provides a resin composition which comprises: a polyarylene sulfide having a chlorine content of 300 ppm or less; a mercapto silane coupling agent; a hydrolysis resistant additive; and a filler, wherein the hydrolysis resistant additive is para-phenylene-diisocyanate.

In addition, the present invention provides a molded article manufactured by molding the above-described resin composition.

### Advantageous Effects of Invention

The resin composition according to the present invention exhibits an improved working life in water contact environment in comparison with conventional PAS, without compromising excellent mechanical and thermal properties unique to PAS. Thus, it can be widely used in various fields requiring durability and high temperature hydrolysis resistance.

### Best Mode for Carrying out the Invention

The present invention provides a resin composition comprising a polyarylene sulfide, a mercapto silane coupling agent, a hydrolysis resistant additive and a filler, wherein the hydrolysis resistant additive is para-phenylene-diisocyanate.

The polyarylene sulfide has a chlorine content of 300 ppm or less. Specifically, the polyarylene sulfide may have a chlorine content of 200 ppm or less, 100 ppm or less, or 50 ppm or less.

The polyarylene sulfide may be comprised in the resin composition in an amount of 15 to 70 wt%, specifically 20 to 65 wt%, based on the total weight of the composition. If the polyarylene sulfide is comprised in an amount of 15 wt% or more, the mechanical strength of the manufactured product such as tensile strength does not decrease, and when it is comprised in an amount of 70 wt% or less, the mechanical strength of the manufactured product becomes excellent.

The polyarylene sulfide comprises an arylene sulfide repeating unit and an arylene disulfide repeating unit, and for example, the weight ratio of arylene sulfide repeating unit to arylene disulfide repeating unit may range from 1: 0.0001 to 1: 0.05, or from 1: 0.001 to 1: 0.01. Since the polyarylene sulfide used in the present invention comprise an arylene disulfide repeating unit as described above, it may have a lower melting point than that of a polyarylene sulfide having the same molecular weight and consisting of an arylene sulfide repeating unit only, and, thus, the processing temperature can be lowered and the physical properties of the finally manufactured polyarylene sulfide can be improved.

The polyarylene sulfide may have a number average molecular weight of 3,000 to 1,000,000, or 10,000 to 100,000, and a polydispersity, defined as a ratio of a weight average molecular weight with respect to the number average molecular weight, may be 2.0 to 4.0, which indicates a relatively narrow dispersion.

The polyarylene sulfide may have a melting point ranging from 270 to 290°C, specifically from 275 to 285°C, and more specifically about 280°C. In addition, the melt viscosity of the polyarylene sulfide measured by a rotational disk-type viscometer at a temperature of a melting point of +20°C may be from 100 to 5,000 poises, specifically from 500 to 3,000 poises, and more specifically about 2,000 poises.

The polyarylene sulfide is not particularly limited as long as it satisfies the physical properties described above. For example, the polyarylene sulfide may be manufactured by a melt polymerization method. In addition, the polyarylene sulfide satisfying the physical properties described above may improve the hydrolysis resistance of a resin composition.

Specifically, the polyarylene sulfide may be manufactured by the manufacturing method disclosed in Korean Laid-open Patent Publication No. 2011-0102226, which may comprise the steps of: (a) polymerizing reactants comprising diiodo aromatic compound and a sulfur compound; and (b) further adding 0.1 to 20 parts by weight of a sulfur compound based on 100 parts by weight of the sulfur compound contained in the reactants during the polymerizing step.

The diiodo aromatic compound may be, for example, selected from the group consisting of diiodobenzene, diiodonaphthalene, diiodobiphenyl, diiodobisphenol, diiodobenzophenone, and a combination thereof, but is not limited thereto.

The polymerization reaction condition in step (a) is not particularly limited as long as the polymerization of the reactants comprising the diiodo aromatic compound and the sulfur compound can be initiated. For example, step (a) may be carried out under elevated temperature and reduced pressure conditions. Specifically, the temperature elevation and pressure reduction is performed by changing the initial reaction condition of a temperature of 180 to 250°C and a pressure of 50 to 450 torr to a final reaction condition of 270 to 350°C and 0.001 to 20 torr. The reaction may be carried out for 1 to 30 hours.

The reactants comprising a diiodo aromatic compound and a sulfur compound may be subjected to a melt blending step prior to the polymerization step. The diiodo aromatic compound may be used in an amount of 1,000 to 2,000 parts, or 1,000 to 17,000 parts by weight based on 100 parts by weight of the sulfur compound introduced before the polymerization.

In the above method, a sulfur compound may be further added during the polymerization reaction as in step (b) to form a disulfide-type bond in the polymer. Such disulfide-type bond may continuously participate in a sulfur exchange reactions, a type of an equilibrium reaction, with the polymer chains included in a polyarylene sulfide, thereby rendering uniform the molecular weights of the polymer chains included in the polyarylene sulfide. Particularly, due to the sulfur exchange reaction, the equilibrium reaction, the degree of polymerization of the polyarylene sulfide may be uniform, and, thus, the formation of polyarylene sulfide polymer chains having excessively large or small molecular weights may be suppressed.

In step (b), 1 to 30 parts by weight of a polymerization terminator may be further added based on 100 parts by weight of the sulfur compound comprised in the reactants. The polymerization terminator is not particularly limited as long as it can terminate the polymerization by removing iodine groups contained in the polymer to be manufactured. Specifically, the polymerization terminator may be selected from the group consisting of diphenyl sulfide, diphenyl ether, biphenyls (or diphenyls), benzophenone, dibenzothiazyl disulfide, monoiodoaryl compounds, benzothiazoles, benzothiazolesulfen amides, thiurams, dithiocarbamates, diphenyl disulfide, and a combination thereof.

The mercapto silane coupling agent may improve the tensile strength and hydrolysis resistance of the resin composition. Specifically, the mercapto silane coupling agent may be selected from the group consisting of 2-mercaptoethyl trimethoxy silane, 3-mercaptopropyl trimethoxy silane, 3-mercaptopropyl triethoxy silane, 2-mercaptoethyl tripropoxy silane, 2-mercaptoethyl tributoxy silane, 2-mercaptoethyl tri sec. butoxy silane, 3-mercaptopropyl triisopropoxy silane, 3-mercaptopropyl trioctoxy silane, 2-mercaptoethyl tri 2'-ethylhexoxy silane, 2-mercaptoethyl dimethoxy ethoxy silane, 3-mercaptopropyl dimethoxy methyl silane, 3-mercaptopropyl methoxy dimethyl silane, 3-mercaptopropyl dimethoxy methylmercapto silane, 3-mercaptopropyl methoxy di(methylmercapto) silane, 3-mercaptopropyl methoxy methyl methylmercapto silane, 2-mercaptoethyl tris(methylmercapto) silane, 2-mercaptoethyl tris(isopropylmercapto) silane, 3-mercaptopropyl tributylmercapto silane, 3-mercaptopropyl tris(octylmercapto) silane, 3-mercaptopropyl cyclohexoxy dimethyl silane, 4-mercaptobutyl trimethoxy silane, 3-mercaptocyclohexyl trimethoxy silane, 3-mercaptocyclohexyl triethoxy silane, 12-mercaptododecyl trimethoxy silane, 18-mercaptooctadecyl trimethoxy silane, 18-mercaptooctadecyl methoxy dimethylsilane, 2-mercaptoethyl tripropoxy silane, 3-mercaptopropyl tripropoxy silane, 4-mercaptobutyl tripropoxy silane, 3-mercaptopropyl dimethoxy silane, 3-mercaptopropyl diethoxy silane and a combination thereof. Specifically, the mercapto silane coupling agent may be selected from the group consisting of 3-mercaptopropyl trimethoxy silane, 3-mercaptopropyl triethoxy silane, 3-mercaptocyclohexyl trimethoxy silane, 3-mercaptocyclohexyl triethoxy silane, 3-mercaptopropyl dimethoxy silane, 3-mercaptopropyl diethoxy silane, and a combination thereof. More specifically, the mercapto silane coupling agent may be selected from the group consisting of 3-mercaptopropyl trimethoxy silane, 3-mercaptopropyl triethoxy silane, and a combination thereof.

The mercapto silane coupling agent may be added in an amount of 0.01 to 5 wt%, specifically 0.1 to 3 wt%, based on the total weight of the resin composition. If the mercapto silane coupling agent is contained within the above range, the effects of increasing mechanical strength and improving hydrolysis resistance may be achieved.

The hydrolysis resistant additive is para-phenylene-diisocyanate.

In addition, the hydrolysis resistant additive may be added in an amount of 0.01 to 5 wt%, specifically 0.1 to 3 wt%, based on the total weight of the resin composition. If the hydrolysis resistant additive is comprised within the above range, the effect of prolonging the working life of the resin composition may be obtained by extending the property-retention period even in a high temperature and high humidity environment.

The resin composition may comprise 15 to 70 wt% of a polyarylene sulfide, 0.01 to 5 wt% of a mercapto silane coupling agent, 0.01 to 5 wt% of a hydrolysis resistant additive, and 25 to 80 wt% of a filler. Specifically, the resin composition may comprise 20 to 65 wt% of a polyarylene sulfide, 0.1 to 3 wt% of a mercapto silane coupling agent, 0.1 to 1 wt% of a hydrolysis resistant additive, and 45 to 75 wt% of a filler.

The filler may be selected from the group consisting of a glass fiber, a carbon fiber, a boron fiber, a glass bead, a glass flake, talc, calcium carbonate, a pigment, and a combination thereof. Specifically, the filler may be selected from the group consisting of a glass fiber, calcium carbonate, a pigment, and a combination thereof.

The glass fiber may be added to improve the mechanical strength and durability of the resin composition. The average diameter of the glass fiber may be 6 to 13 µm, specifically 9 to 11 µm. In addition, the average length of the glass fiber may be 1 to 6 mm, specifically 3 to 5 mm. The glass fiber may be selected from the group consisting of a glass fiber surface-treated with an urethane/epoxy silane, a glass fiber surface-treated with an urethane/amino silane, and a combination thereof. The urethane/epoxy silane refers to a water-soluble urethane resin containing an epoxy silane, and the urethane/amino silane refers to a water-soluble urethane resin which containing an amino silane. Commercially available glass fibers include OCV910 manufactured by Owens Corning and FT523 manufactured by Owens Coming, etc.

The calcium carbonate may be added to improve the modulus characteristic of the resin composition and may have an average particle diameter of 0.8 to 20 µm, specifically 1.0 to 10 µm.

As the pigment, various conventional organic or inorganic pigments known in the art may be used. For example, the pigment may be selected from the group consisting of titanium dioxide (TiO₂), carbon black, and a combination thereof, and specifically, it may be carbon black.

In addition, the filler may include 20 to 65 wt% of a glass fiber, 10 to 45 wt% of calcium carbonate, and 0.01 to 5 wt% of a pigment based on the total weight of the resin composition. Specifically, the filler may include 30 to 60 wt% of a glass fiber, 15 to 40 wt% of calcium carbonate, and 0.1 to 3 wt% of a pigment based on the total weight of the resin composition. More specifically, the filler may include 35 to 55 wt% of a glass fiber, 15 to 30 wt% of calcium carbonate, and 0.1 to 1 wt% of a pigment based on the total weight of the resin composition.

The resin composition of the present invention may further comprise a component selected from the group consisting of a lubricant, a stabilizer, a plasticizer and a combination thereof.

The lubricant may be added to improve moldability. In particular, a hydrocarbon-based lubricant may be used to prevent friction between the resin and the mold metal, and to confer releasability from the mold. The hydrocarbon-based lubricant may be selected from the group consisting of montanic acid, a metal salt (e.g., one having calcium, magnesium, zinc, etc.), an ester, stearic amide, a polyethylene wax and a combination thereof. In addition, the lubricant may be added to the resin composition in an amount of 0.1 to 3.0 parts by weight, specifically 0.1 to 1.0 part by weight based on 100 parts by weight of the composition.

The stabilizer may be selected from the group consisting of antioxidants, photo stabilizers, UV stabilizers, and a combination thereof. The stabilizer may be added to the resin composition in an amount of 0.1 to 3.0 parts by weight, specifically 0.1 to 1.0 part by weight based on 100 parts by weight of the composition.

The antioxidant is not particularly limited as long as it can sustain high heat resistance and thermal stability of the resin composition, and examples thereof include phenolic antioxidants, amine antioxidants, sulfur antioxidants and phosphorus antioxidants. As the phenolic antioxidant, hindered phenolic compounds may be used. Specific examples thereof include tetrakis(methylene-3-(3,5-di-tert-butyl-4-hydroxyphenyl)propionate]methane, thiodiethylene bis[3-(3,5-di-tert-butyl-4-hydroxyphenyl)propionate], N,N'-hexane-1,6-diylbis[3-(3,5-di-tert-butyl-4-hydroxyphenyl)propionamide], and so on.

Examples of the phosphorus antioxidants may include tris(2,4-di-tert-butylphenyl)phosphate, O,O'-dioctadecylpentaerythritol bis(phosphite), bis(2,4-di-tert-butylphenyl)pentaerythritol diphosphite, 3,9-bis(2,4-di-tert-butylphenoxy)-2,4,8,10-tetraoxy-3,9-diphospaspiro[5.5]undecane, and so on.

The photo stabilizer and the UV stabilizer are not particularly limited as long as they can prevent the discoloration of the resin composition and provide light (UV) stability. Examples of the light stabilizer and UV stabilizer may include benzotriazoles, benzophenones, and hindered amine compounds, etc.

The resin composition may have a tensile strength value of 50 to 200 MPa, 60 to 200 MPa, 70 to 180 MPa or 100 to 180 MPa, as measured according to ASTM D 638.

Meanwhile, the present invention provides a molded article manufactured from the resin composition. Specifically, the resin composition may be manufactured into a molded article having an excellent hydrolysis resistance and durability and applicable to various uses, by molding the resin composition by a method known in the art such as biaxial extrusion.

The molded article may be in various forms such as a film, a sheet, or a fiber, and the molded article may be an injection molded article, an extrusion molded article, or a blow molded article. For example, in the case of injection molding the temperature of the mold may be about 130°C or higher in consideration of crystallization. In case that the molded articles are in film or sheet forms, they may be manufactured as various films or sheets by a non-orientation method, a uniaxial orientation method, biaxial orientation method, or the like. In case that the molded articles are fibers, they may be various kinds of fibers such as a non-drawn fiber, a drawn fiber, or an ultra-drawn fiber, etc., and may be used as a fabric, knitted goods, a non-woven fabric (spunbond, meltblow, or staple), a rope, or a net. The above molded articles may be used as electric/electronic parts, building materials, automobile parts, machine parts, or basic commodities, as well as coatings of an area in contact with chemicals or an industrial fiber with chemical resistance. They are particularly useful as parts of automobile coolant (antifreeze solution) systems.

Hereinafter, the present invention will be described in detail with reference to the following examples. However, the following examples are intended to further illustrate the present invention without limiting its scope.

### Mode for the Invention

### Preparation Example: Preparation of PPS resin

40 kg of p-diiodobenzene, 3.4 kg of sulfur, and 150 g of 1,3-diiodo-4-nitrobenzene as a catalyst were put into a reactor and melt blended at 180°C. A polymerization reaction was carried out while raising the temperature of the mixed reactants from 180°C to 340°C and reducing the pressure from the atmospheric pressure to 10 torr. After 5 hours from the initiation of the polymerization, 150 g of sulfur and 100 g of diphenyl sulfide as a polymerization terminator were added thereto, and the reaction was further performed for 3 hours to obtain PPS resins. Each of the PPS resins prepared was injected with an injection speed of 50 mm/s, an injection pressure of 120 MPa, and an injection temperature of 310°C using 80 ton Engel injection machine, to prepare injection specimens.

Melt viscosity (MV), melting point (Tm), number average molecular weight (Mn), polydispersity index (PDI), weight ratio of arylene sulfide repeating unit to arylene disulfide repeating unit, chlorine content and iodine content of the resulting PPS resins were measured by the following method. As a result, the PPS resin had MV of 2,000 poises, a Tm of 280°C, Mn of 15,000, PDI of 2.8, the chlorine content of 0 ppm, a weight ratio of arylene sulfide repeating unit to arylene disulfide repeating unit of 1: 0.003, and the iodine content of 1,000 ppm.

### Melt viscosity (MV)

Melt viscosity was measured at 300°C using a rotating disk viscometer. In the frequency sweep method, the angular frequency was measured from 0.6 to 500 rad/s, and the viscosity at 1.84 rad/s was defined as melt viscosity (MV).

### Melting point

Using a differential scanning calorimeter (DSC), the melting point was measured while the temperature was raised from 30°C to 320°C at a rate of 10°C/minute, cooled to 30°C, and then raised from 30°C to 320°C at a rate of 10°C/minute.

### Number average molecular weight (Mn) and polydispersity index (PDI)

A sample was prepared by dissolving the PPS resin in 1-chloronaphthalene to obtain the PPS concentration of 0.4 wt% and stirred at 250°C for 25 minutes. Then, the sample was introduced at a flow rate of 1 mL/min in the column of a high temperature gel permeation chromatography (GPC) system (210°C), polyarylene sulfides having different molecular weights were sequentially separated, and the intensities corresponding to the molecular weight of the separated polyarylene sulfide was measured using an RI detector. After determining a calibration curve with a standard specimen (polystyrene) whose molecular weight was known, the number average molecular weight (Mn) and polydispersity index (PDI) of the PPS resin were calculated.

### Chlorine (Cl) content

50 mg of the injection specimen was heated at 1,000°C using AQF (Auto Quick Furnace) to completely incinerate any organic substances and the combustion gas was entrapped in an absorption solution (900 ppm of hydrogen peroxide solution) and auto-injected into Ion chromatography (Auto Quick Furnace) to measure the chlorine (Cl) content.

### Iodine (I) content

50 mg of the injection specimen was heated at 1,000°C using AQF (Auto Quick Furnace) to completely incinerate any organic substances and the combustion gas was entrapped in an absorption solution (900 ppm of hydrogen peroxide solution, and 900 ppm of hydrazine) and auto-injected into Ion chromatography (Auto Quick Furnace) to measure the iodine (I) content.

### Arylene disulfide weight analysis method

After incinerating a small amount (about 2 mg) of a sample at 1,000°C using AQF (Automatic Quick Furnace), the sulfuric acid gas was collected in an absorbing solution (hydrogen peroxide solution) and ionized, and then sulfur ion was separated in the column using IC (Ion Chromatography) measurement method. The sulfur content was quantified by the sulfur ion standard material (K₂SO₄), and the difference between the measured sulfur content and the theoretical sulfur content was calculated as the amount of disulfide.

### Example 1: Preparation of resin composition

Each component constituting the composition was added to a biaxial screw extruder in a compositional amount corresponding to 35 wt% of PPS obtained in the above preparation Example, 40 wt% of urethane/amino silane-treated glass fiber (OCV-910, Owens Coming), 24 wt% of calcium carbonate (Omiya 1HB), 0.5 wt% of 3-mercaptopropyl trimethoxy silane (Momentive, Silquest A-189) and 0.5 wt% of a hydrolysis resistant additive (epoxy resin, BASF, ADR 4370S), and then 0.5 part by weight of carbon black (Orion Engineering Carbon Co., Ltd., Hiblck^{®}50L) based on 100 parts by weight of the composition was further added to prepare a resin composition.

The biaxial screw extruder manufactured by SM platek had a diameter of 40 mm and an L/D of 44. The process conditions were a screw speed of 250 rpm, a feed rate of 40 kg/hr, a barrel temperature of 280°C to 300°C, and a torque of 60%. Three feeders were used to inject the raw materials. The first feeder was used to feed the PPS resin, carbon black, a mercapto silane coupling agent and a hydrolysis resistant additive; the second feeder to feed calcium carbonate, and the third feeder to feed a glass fiber, for preparing a PPS resin composition. Example 1 represents a comparative example of the present invention.

### Examples 2 to 4

A PPS resin composition was prepared by the same method as in Example 1, except that the components and their contents shown in Table 2 were used. Examples 2 to 4 represent working examples of the present invention.

### Comparative Examples 1 to 11

A resin composition was prepared by the same method as in Example 1, except that the components and their contents shown in Tables 2 and 3 were used and neither calcium carbonate nor glass fibers was added.

The components used in Examples 1 to 4 and Comparative Examples 1 to 11 are shown in Table 1 below.

**[Table 1]**

| Item | Component | Product Name | Manufacturer |
|---|---|---|---|
| A-1 | Melt polymerization PPS | - | Prepared in the Preparation Example |
| A-2 | Solution polymerization PPS (About 2,000 ppm of chlorine content) | 0205P4 | Ticona |
| A-3 | Solution polymerization PPS (About 3,500 ppm of chlorine content) | 1170C | NHU |
| B-1 | Polyphthal amide (PPA; 33 wt% of filler content) | AMODEL AS-1933HS | Slovay |
| B-2 | PPA | ZYTEL 51G35 | DuPont |
| B-3 | Poly amide (PA) | ZYTEL 70G30 | DuPont |
| C | Glass fiber surface-treated with urethane/amino silane | OCV-910 | Owens Coming |
| D-1 | Silane coupling agent (3-glycidoxy propyl trimethoxy silane) | Silquest A-187 | Momentive |
| D-2 | Silane coupling agent (3-mercaptopropyltrimethoxysilane) | Silquest A-189 | Momentive |
| D-3 | Silane coupling agent (3 -aminopropyltriethoxysilane) | Silquest A-11 00 | Momentive |
| E | Hydrolysis resistant additive (epoxy resine) | ADR 4370S | BASF |
| F | Hydrolysis resistant additive (paraphenylene diisocyanate) | Hylene PPDI | DuPont |

### Experimental Example

The properties of the resin compositions prepared in Examples 1 to 4 and Comparative Examples 1 to 11 were measured as described below and the measurement results are shown in Tables 2 to 4.

First, the resin compositions prepared in Examples 1 to 4 and Comparative Examples 1 to 11 were respectively injected at 310°C to prepare injection specimens.

### (1) Measurement of moisture absorption rate

Using Karl Fisher Moisture Meter (Mitsubishi, VA-100 solid-phase method), 5 g of the injection specimen (in a pellet form) was tested under the following conditions, and the moisture content was measured by heating at 230°C for 1 hour after the surface moisture was removed.
- Constant temperature/ constant humidity test: 80°C and 80% humidity
- Sample: 5 g of pellet
- Immersion time: 3 days
- Absorption rate measurement equipment: Karl Fisher Moisture Meter

### (2) Tensile strength

The tensile strength of the injection specimen was measured according to ASTM D 638.

### (3) Water immersion test

The flexural strength specimens (ASTM D 740) were immersed in distilled water at 60°C for 1,000 hours. After 500 hours and 1,000 hours of immersion, the flexural strength specimens were taken out and the flexural strength was measured by the same method as described above, and the flexural strength values before and after immersion were compared, to evaluate the property retention ratio (Retention%, RT%).

### (4) Long life coolant test (LLC test)

The tensile strength specimens (ASTM D 638) were immersed at 140°C for 3,000 hours. After 1,000 hours and 3,000 hours of immersion, the injection specimens were taken out and the tensile strength was measured by the same method as described above, and the tensile strength values before and after immersion were compared, to evaluate the property retention ratio (Retention%, RT%).

**[Table 2]**

| Component | | Ex. 1 | Ex. 2 | Ex. 3 | Ex. 4 | Comp. Ex. 1 | Comp. Ex. 2 | Comp. Ex. 3 | Comp. Ex. 4 |
|---|---|---|---|---|---|---|---|---|---|
| A-1 (Melt polymerization PPS) (wt%) | | 35 | 35 | 35 | 35 | 35 | 35 | 35 | 35 |
| A-2 (Solution polymerization PPS) (wt%) | | - | - | - | - | - | - | - | - |
| A-3 (Solution polymerization PPS) (wt%) | | - | - | - | - | - | - | - | - |
| B-1 (PPA) (wt%) | | - | - | - | - | - | - | - | - |
| B-2 (PPA) (wt%) | | - | - | - | - | - | - | - | - |
| B-3 (PA) (wt%) | | - | - | - | - | - | - | - | - |
| C (glass fiber) (wt%) | | 40 | 40 | 43 | 45 | 40 | 40 | 40 | 40 |
| Calcium carbonate (wt%) | | 24 | 24 | 21 | 19 | 25 | 24.5 | 24.5 | 24.5 |
| D-1 (wt%) | | - | - | - | - | - | 0.5 | - | - |
| D-2 (wt%) | | 0.5 | 0.5 | 0.5 | 0.5 | - | - | 0.5 | - |
| D-3 (wt%) | | - | - | - | - | - | - | - | 0.5 |
| E (wt%) | | 0.5 | - | - | - | - | - | - | - |
| F (wt%) | | - | 0.5 | 0.5 | 0.5 | - | - | - | - |
| Carbon Black (Parts by weight) | | 0.5 | 0.5 | 0.5 | 0.5 | 0.5 | 0.5 | 0.5 | 0.5 |
| Properties | Initial tensile strength(MPa) | 155 | 160 | 155 | 155 | 135 | 150 | 150 | 155 |
| | LLC test(RT%) (140°C, 1000 hr) | 88 | 89 | 90 | 92 | 80 | 80 | 84 | 82 |
| | LLC test (RT%) (140°C, 3000 hr) | 84 | 85 | 87 | 88 | 65 | 68 | 75 | 73 |

**[Table 3]**

| Componet | Comp. Ex. 5 | Comp. Ex. 6 | Comp. Ex. 7 | Comp. Ex. 8 | Comp. Ex. 9 | Comp. Ex. 10 | Comp. Ex. 11 | |
|---|---|---|---|---|---|---|---|---|
| A-1 (Melt polymerization PPS) (wt%) | - | - | - | - | - | - | - | |
| A-2 (Solution polymerization | 35 | 35 | - | - | - | - | - | |
| PPS) (wt%) | | | | | | | | |
| A-3 (Solution polymerization PPS) (wt%) | | - | - | 35 | 35 | - | - | - |
| B-1 (PPA) (wt%) | | - | - | - | - | 100 | - | - |
| B-2 (PPA) (wt%) | | - | - | - | - | - | 100 | - |
| B-3 (PA) (wt%) | | - | - | - | - | - | - | 100 |
| C (glass fiber) (wt%) | | 40 | 40 | 40 | 40 | - | - | - |
| Calcium carbonate (wt%) | | 25 | 24.5 | 25 | 24.5 | - | - | - |
| D-1 (wt%) | | - | - | - | - | - | - | - |
| D-2 (wt%) | | - | 0.5 | - | 0.5 | - | - | - |
| D-3 (wt%) | | - | - | - | - | - | - | - |
| E (wt%) | | - | - | - | - | - | - | - |
| F (wt%) | | - | - | - | - | - | - | - |
| Carbon black (part by weight) | | 0.5 | 0.5 | 0.5 | 0.5 | - | - | - |
| Properties | Initial tensile strength (MPa) | 140 | 150 | 140 | 152 | 220 | 219 | 195 |
| | LLC test (RT%) (140°C, 1000 hr) | 65 | 68 | 60 | 63 | 17 | 48 | 9 |
| | LLC test (RT%) (140°C, 3000 hr) | 60 | 60 | 56 | 60 | 8 | 11 | 1 |

**[Table 4]**

| | Comp. Ex. 2 | Comp. Ex. 5 | Comp. Ex. 7 |
|---|---|---|---|
| Moisture absorption rate (ppm) (3 days, 80°C/80%) | 400 | 600 | 700 |
| Water immersion test (RT%) (60°C, 500 hr) | 95 | 75 | 67 |
| Water immersion test (RT%) (60°C, 1,000 hr) | 92 | 71 | 64 |

As shown in Tables 2 and 3, the resin compositions of Examples 2 to 4 of the present invention showed long term hydrolysis resistant property-retention rate of 75% or more in the LLC test for 3,000 hours, which was substantially higher than those of Comparative Examples 1 to 11. In particular, the compositions of Comparative Examples 9 to 11 containing PPA or PA instead of PPS showed long term hydrolysis resistant property-retention rate of 20% or less, which is unsuitable for use as automobile coolant parts requiring a long working life.

In addition, the compositions of Examples 2 to 4 containing a mercapto silane coupling agent and a hydrolysis resistant additive showed increased long term hydrolysis resistant property-retention rate when compared with the composition of Comparative Example 1 containing neither mercapto silane coupling agent nor hydrolysis resistant additive and the composition of Comparative Example 3 containing a mercapto silane coupling agent only.

As shown in Table 4, the specimen of Comparative Example 2 containing the PPS prepared by melt polymerization method showed lower moisture absorption rate than the specimens of Comparative Examples 5 and 7 containing solution polymerization PPS. This may be due to no exisitence of residual salts that affect the moisture absorption.

## Claims

1. A resin composition comprising: a polyarylene sulfide having a chlorine content of 300 ppm or less; a mercapto silane coupling agent; a hydrolysis resistant additive; and a filler; wherein the hydrolysis resistant additive is para-phenylene-diisocyanate.

2. The resin composition of claim 1, wherein the polyarylene sulfide comprises an arylene sulfide repeating unit and an arylene disulfide repeating unit in a weight ratio ranging from 1: 0.0001 to 0.05.

3. The resin composition of claim 1, wherein the mercapto silane coupling agent is selected from the group consisting of 3-mercaptopropyl trimethoxy silane, 3-mercaptopropyl triethoxy silane, 3-mercaptocyclohexyl trimethoxy silane, 3-mercaptocyclohexyl triethoxy silane, 3-mercaptopropyl dimethoxy silane, 3-mercaptopropyl diethoxy silane and a combination thereof.

4. The resin composition of claim 1, wherein the filler is selected from the group consisting of a glass fiber, a carbon fiber, a boron fiber, a glass bead, a glass flake, talc, calcium carbonate, a pigment and a combination thereof.

5. The resin composition of claim 4, wherein the filler is selected from the group consisting of a glass fiber, calcium carbonate, a pigment and a combination thereof.

6. The resin composition of claim 5, wherein the glass fiber is selected from the group consisting of a glass fiber surface-treated with an urethane/epoxy silane, a glass fiber surface-treated with an urethane/amino silane and a combination thereof.

7. The resin composition of claim 5, wherein the glass fiber has an average diameter of 6 to 13 µm and an average length of 1 to 6 mm.

8. The resin composition of claim 5, wherein the calcium carbonate has an average particle diameter of 0.8 to 20 µm.

9. The resin composition of claim 5, wherein the filler comprises 20 to 65 wt% of the glass fiber, 10 to 45 wt% of the calcium carbonate and 0.01 to 5 wt% of the pigment based on the total weight of the resin composition.

10. The resin composition of claim 1, wherein the resin composition comprises 15 to 70 wt% of the polyarylene sulfide, 0.01 to 5 wt% of the mercapto silane coupling agent, 0.01 to 5 wt% of the hydrolysis resistant additive and 25 to 80 wt% of the filler based on the total weight of the resin composition.

11. The resin composition of claim 1, wherein the resin composition has a tensile strength value of 50 to 200 MPa as measured according to ASTM D 638.

12. A molded article manufactured by molding the resin composition according to any one of claims 1 to 11.

13. A molded article of claim 12, wherein the molded article is a part of an automobile engine coolant system.

## Patentansprüche

1. Harzzusammensetzung, umfassend: ein Polyarylensulfid mit einem Chlorgehalt von 300 ppm oder weniger; ein Mercaptosilan-Kopplungsmittel; ein hydrolysebeständiges Additiv; und einen Füllstoff; wobei es sich bei dem hydrolysebeständigen Additiv um para-Phenylendiisocyanat handelt.

2. Harzzusammensetzung gemäß Anspruch 1, wobei das Polyarylensulfid eine Arylensulfid-Repetiereinheit und eine Arylendisulfid-Repetiereinheit in einem Gewichtsverhältnis im Bereich von 1 : 0,0001 bis 0,05 umfasst.

3. Harzzusammensetzung gemäß Anspruch 1, wobei das Mercaptosilan-Kopplungsmittel aus der Gruppe ausgewählt ist, die aus 3-Mercaptopropyltrimethoxysilan, 3-Mercaptopropyltriethoxysilan, 3-Mercaptocyclohexyltrimethoxysilan, 3-Mercaptocyclohexyltriethoxysilan, 3-Mercaptopropyldimethoxysilan, 3-Mercaptopropyldiethoxysilan und einer Kombination davon besteht.

4. Harzzusammensetzung gemäß Anspruch 1, wobei der Füllstoff aus der Gruppe ausgewählt ist, die aus einer Glasfaser, einer Kohlefaser, einer Borfaser, einem Glaskügelchen, einer Glasflocke, Talk, Calciumcarbonat, einem Pigment und einer Kombination davon besteht.

5. Harzzusammensetzung gemäß Anspruch 4, wobei der Füllstoff aus der Gruppe ausgewählt ist, die aus einer Glasfaser, Calciumcarbonat, einem Pigment und einer Kombination davon besteht.

6. Harzzusammensetzung gemäß Anspruch 5, wobei die Glasfaser aus der Gruppe ausgewählt ist, die aus einer mit einem Urethan/Epoxysilan oberflächenbehandelten Glasfaser, einer mit einem Urethan/Aminosilan oberflächenbehandelten Glasfaser und einer Kombination davon besteht.

7. Harzzusammensetzung gemäß Anspruch 5, wobei die Glasfaser einen mittleren Durchmesser von 6 bis 13 µm und eine mittlere Länge von 1 bis 6 mm aufweist.

8. Harzzusammensetzung gemäß Anspruch 5, wobei das Calciumcarbonat einen mittleren Teilchendurchmesser von 0,8 bis 20 µm aufweist.

9. Harzzusammensetzung gemäß Anspruch 5, wobei der Füllstoff 20 bis 65 Gew.-% der Glasfaser, 10 bis 45 Gew.-% des Calciumcarbonats und 0,01 bis 5 Gew.-% des Pigments umfasst, bezogen auf das Gesamtgewicht der Harzzusammensetzung.

10. Harzzusammensetzung gemäß Anspruch 1, wobei die Harzzusammensetzung 15 bis 70 Gew.-% des Polyarylensulfids, 0,01 bis 5 Gew.-% des Mercaptosilan-Kopplungsmittels, 0,01 bis 5 Gew.-% des hydrolysebeständigen Additivs und 25 bis 80 Gew.-% des Füllstoffs umfasst, bezogen auf das Gesamtgewicht der Harzzusammensetzung.

11. Harzzusammensetzung gemäß Anspruch 1, wobei die Harzzusammensetzung einen Zugfestigkeitswert von 50 bis 200 MPa aufweist, gemessen gemäß ASTM D 638.

12. Formkörper, hergestellt durch Formen der Harzzusammensetzung gemäß einem der Ansprüche 1 bis 11.

13. Formkörper gemäß Anspruch 12, wobei der Formkörper Teil eines Automotor-Kühlmittelsystem ist.

## Revendications

1. Composition de résine, comprenant : un sulfure de polyarylène avec une teneur de chlore de 300 ppm ou moins, un agent de couplage de type mercaptosilane, un additif résistant à l'hydrolyse, et une charge, dans laquelle ledit additif résistant à l'hydrolyse est le diisocyanate de para- phenylène.

2. Composition de résine selon la revendication 1, dans laquelle ledit sulfure de polyarylène comprend un motif répétitif de sulfure d'arylène, et un motif répétitif de disulfure d'arylène, dans un rapport pondéral compris dans la gamme allant de 1 : 0,0001 à 0,05.

3. Composition de résine selon la revendication 1, dans laquelle ledit agent de couplage de type mercaptosilane est choisi dans le groupe consistant en 3-mercaptopropyltriméthoxysilane, 3-mercaptopropyltriéthoxysilane, 3-mercaptocyclohexyltriméthoxysilane, 3-mercaptocyclohexyltriéthoxysilane, 3-mercaptopropyldiméthoxysilane, 3-mercaptopropyldiéthoxysilane, et une combinaison de ceux-ci.

4. Composition de résine selon la revendication 1, dans laquelle ladite charge est choisie dans le groupe consistant en une fibre de verre, une fibre de carbone, une fibre de bore, une bille de verre, une écaille de verre, talc, carbonate de calcium, un pigment, et une combinaison de ceux-ci.

5. Composition de résine selon la revendication 4, dans laquelle ladite charge est choisie dans le groupe consistant en une fibre de verre, carbonate de calcium, un pigment, et une combinaison de ceux-ci.

6. Composition de résine selon la revendication 5, dans laquelle ladite fibre de verre est choisie dans le groupe consistant en une fibre de verre traitée en surface par un uréthane/époxysilane, une fibre de verre traitée en surface par un uréthane/aminosilane, et une combinaison de celles-ci.

7. Composition de résine selon la revendication 5, dans laquelle ladite fibre de verre présente un diamètre moyen de 6 à 13 µm et une longueur moyenne de 1 à 6 mm.

8. Composition de résine selon la revendication 5, dans laquelle ledit carbonate de calcium présente un diamètre de particule moyen de 0,8 à 20 pm.

9. Composition de résine selon la revendication 5, dans laquelle ladite charge comprend 20 à 65 % en poids de fibre de verre, 10 à 45 % en poids de carbonate de calcium, et 0,01 à 5 % en poids de pigment, par rapport au poids total de la composition de résine.

10. Composition de résine selon la revendication 1, dans laquelle la composition de résine comprend 15 à 70 % en poids dudit sulfure de polyarylène, 0,01 à 5 % dudit agent de couplage de type mercaptosilane, 0,01 à 5 % en poids dudit additif résistant à l'hydrolyse, et 25 à 80 % en poids de ladite charge, par rapport au poids total de la composition de résine.

11. Composition de résine selon la revendication 1, dans laquelle ladite composition de résine présente une valeur de résistance à la traction de 50 à 200 MPa, mesurée selon la norme ASTM D 638.

12. Article moulu, fabriqué par moulage de ladite composition de résine selon l'une quelconque des revendications 1 à 11.

13. Article moulu selon la revendication 12, dans lequel ledit article moulu fait partie d'un système de réfrigérant de moteur d'automobile.
